# EUROPÄISCHE PATENTANMELDUNG

(11) **EP 4 480 599 A2**
(43) Veröffentlichungstag der Anmeldung: **25.12.2024**
(21) Anmeldenummer: 24204617.5
(22) Anmeldetag: 04.10.2024
(51) Int. Cl.: B21K 1/56, F16B 25/10

(54) **VERFAHREN ZUR HERSTELLUNG EINER ROSTFREIEN HOCHFESTEN SELBSTBOHRSCHRAUBE**

(71) Anmelder: SFS Group International AG, 9435 Heerbrugg (CH)
(72) Erfinder: Kuster, Hanspeter, 9436 Balgach (CH); Spirig, Sven, 9444 Diepoldsau (CH)

(57) **Zusammenfassung**

Ein Verfahren zur Herstellung einer hochfesten Selbstbohrschraube (100) vollständig aus einem Edelstahlmaterial wird beschrieben, wobei die Selbstbohrschraube (100) keinen dem Herstellprozess nachgelagerten, die Materialhärte verbessernden Wärmebehandlungsprozess durchlaufen muss. Ein schaftförmiger Rohling (110) wird als Drahtabschnitt (105) aus einem Edelstahlmaterial bereitgestellt. Ein Schraubenkopf (140) wird mittels Kaltumformung an einem ersten Längsende (120) des Rohlings (110) gebildet. Anschliessend wird der Durchmesser eines Endabschnitts des Rohlings durch Kaltumformung in zwei Schritten verringert. Sodann wird eine Bohrspitze (150) am zweiten Längsende (130) des Rohlings (110) durch eine quer zur Längsachse erfolgende Zwickbewegung hergestellt. Dabei werden gekühlte Werkzeugbacken eingesetzt. In einem nachfolgenden Prozessschritt wird die Bohrspitze (160) fertiggestellt. Nachfolgend können ein- oder mehrlagige Gleitbeschichtungen aufgebracht werden.

## Beschreibung

Die vorliegende Erfindung betrifft ein Verfahren zur Herstellung eines hochfesten Befestigers aus rostfreiem Stahl, insbesondere einer Selbstbohrschraube sowie eine auf diese Weise hergestellte Selbstbohrschraube.

### TECHNISCHER HINTERGRUND

Stahl wird üblicherweise als eine Eisen-Kohlenstoff-Legierung definiert mit einem Kohlenstoff-Anteil von höchstens 2%. Als Carbonstahl bzw. unlegierter Stahl werden solche Varianten bezeichnet, die nur geringe Verunreinigungen bzw. keine gezielt zugesetzten Legierungsbestandteile wie Chrom, Nickel, Kupfer, Mangan oder Silizium aufweisen. Nichtrostende Stähle, vielfach auch als Edelstähle oder präziser als korrosionsarme Stähle bezeichnet, zeichnen sich durch einen Legierungsanteil von >10% Chrom und weniger als 1.2% Kohlenstoff aus.

Wegen der Einlagerung von Kohlenstoff in die Matrix des Stahl-Gitters lässt sich Carbonstahl grundsätzlich besser härten als korrosionsarme Stähle. Diese Härtung wird üblicherweise durch Härteverfahren (Wärmebehandlung, Einsatzhärten wie Carbonitrieren) oder Kaltumformungsprozesse erzielt. Diese - in der Regel erwünschte - Härte des Stahls wird aber mit dem grundsätzlichen Nachteil der Korrosionsanfälligkeit erkauft. Daher sind bei bestimmten Endprodukten eine Nachbehandlung (Beschichtung, Passivierung) erforderlich, um sie in gewissen Grenzen resistent gegen Umwelteinflüsse zu machen.

Unter den korrosionsarmen Stählen sind die gebräuchlichsten jene mit den Legierungsbestandteilen Chrom und Nickel wie die Stahlsorten 1.4301 (V2A oder A2) bzw. 1.4401 (V4A oder A4). Für diese Stähle mit spezifizierter Zusammensetzung existieren Normen, so dass diese Sorten mit vergleichbaren Eigenschaften aus verschiedenen Quellen bezogen werden können. Diese Stähle werden auch als austenitisch bezeichnet, weil die Legierungsbestandteile Ni, C, Mn und N bei der Herstellung die Austenitphase im Stahl stabilisieren.

Duplexstahl ist ein Stahl mit zweiphasigem Gefüge, das aus einer Ferrit-Matrix mit Inseln aus Austenit besteht. Duplexstahl weist, im Vergleich zu rein austenitischen Stählen einen geringeren Nickel-Gehalt auf, was dazu führt, dass bei Raumtemperatur nicht das gesamte Gefüge austentitisch wird. Beispiele hierfür sind die Sorten 1.4462 bzw. 1.4362.

Viele Produkte des täglichen Bedarfs wie auch der Bauindustrie werden aus Stahl hergestellt; unter anderem Befestiger wie Schrauben in allen denkbaren Grössen für viele Anwendungsbereiche. Dabei wäre es oft wünschenswert, die Härte von Kohlenstoffstahl mit der Korrosionsresistenz von Edelstahl zu kombinieren. Dies wird insbesondere bei Bohrschrauben üblicherweise dadurch erreicht, dass man einen Kohlenstoffstahl-Drahtabschnitt an einen Edelstahldraht gleichen Durchmessers anschweisst und einen solchen Rohling in bekannter Weise zu einem Befestiger verarbeitet. Der Kohlenstoffstahl-Abschnitt ist hierbei für die Bohrspitze vorgesehen. Ergänzend kann die gerollte bzw. umgeformte Spitze aus Kohlenstoffstahl durch Wärmebehandlung gehärtet werden, während der Schaft aus Edelstahl in der Regel unbehandelt bleiben kann, was auch die korrosionshemmenden Eigenschaften des Stahls bewahrt.

Als Befestiger wird in dieser Schrift ein mechanisches Bauteil bezeichnet, mit dessen Hilfe zwei Komponenten dauerhaft miteinander verbunden werden können (lösbar wie auch unlösbar). Als Schraube wird spezifisch ein Befestiger bezeichnet, der einen im Wesentlichen längsausgedehnten Schaft aufweist mit zylindrischem oder zylinderähnlichem Querschnitt. An einem Längsende des Schaftes befindet sich ein Kraftangriff, der als Kopf mit Kraftangriffsflächen gestaltet sein kann. Am entgegengesetzten Schaftende befindet sich die Spitze der Schraube. Der Schaft ist zumindest in einem Teilabschnitt mit einem Gewinde versehen, es kann ein- oder mehrgängig sein mit konstanter oder veränderlicher Steigung. Die Spitze kann als Bohrspitze mit Schneidkanten; als stumpfkonische, gewindelose Verdrängerspitze oder als spitzkonische, selbst loch- und gewindeformende Spitze ausgebildet sein. Je nach Anwendungszweck kann das Gewinde vom Schaft bis auf den Konus bzw. an die Schraubenspitze reichen.

Als Bohrschraube wird eine Schraube mit einer Bohrspitze mit Schneidkanten bezeichnet, bei der das (Schaft-) Gewinde gerollt und die Bohrspitze gezwickt wird. Zwicken bezeichnet dabei eine spezielle Art der Kaltumformung, bei der ein Schaftende des Rohlings durch zwei zulaufende Zwickbacken in die gewünschte Form einer Bohrspitze gepresst wird. Andere Verfahren der Kaltumformung sind das Rollen, das Stauchen, Ziehen und Fliesspressen. Grundsätzlich versteht der Fachmann unter Kaltumformung ein plastisches Umformen von Metallen unterhalb der Rekristallisationstemperatur, was bekanntermassen zu einer (erwünschten) Kaltverfestigung des umgeformten Materials führt.

Die Herstellung von Befestigern bzw. Schrauben rein aus Edelstählen ist bekannt; die Durchdringungsfähigkeit von Stahl mit entsprechenden (Selbst-)Bohrschrauben bzw. loch- und gewindeformenden Schrauben ist jedoch begrenzt. Bimetallschrauben sind herstelltechnisch komplex und teuer zu realisieren. Es besteht daher ein Bedarf an Befestigern, insbesondere Schrauben bzw. Selbstbohrschrauben, welche vollständig aus einer korrosionsfesten Stahlsorte herstellbar sind und dennoch Stahlbleche mit >1.5mm Stärke ohne Vorbohren durchdringen können.

### STAND DER TECHNIK

Die Offenlegungsschrift DE 29 29 179 beschreibt eine korrosionsbeständige, selbstbohrende und gewindeformende Schraube aus einem rostfreien austenitischen Stahlmaterial (nach US Norm Serie 300). Die Verfahrensschritte bei der Herstellung umfassen das Aufstauchen eines Kopfes am Ende eines Drahtabschnitt des genannten Materials und nachfolgend, am entgegengesetzten Ende, die Ausbildung einer Bohrspitze durch einen Zwickvorgang mit definierter maximaler Schliessgeschwindigkeit der Zwickbacken. Dadurch wird die austenitische Struktur der Bohrspitze in eine martensitische überführt. Die Schrift empfiehlt zusätzlich, den Pressrohling auf Temperaturen unter 0°C zu kühlen, z.B. durch Trockeneis.

Die Schrift EP 2 080 572 beschreibt die Herstellung eines hochfesten Befestigers aus austenitischem Stahl der 300er Serie (gemäss US-Norm), indem in einem ersten Arbeitsschritt ein Schaftrohling um 15% im Durchmesser durch Kaltumformung verkleinert wird. Danach werden Kopf und Spitze ebenfalls durch Kaltumformung hergestellt. Das Gewinde wird durch ein Rollverfahren auf dem Schaft erzeugt. Weiter wird vorgeschlagen, bei dem kaltumgeformten Befestiger durch Nachbehandlung bzw. Beschichtung die Rostbeständigkeit zu verbessern.

In der Schrift DE 2 103 053 bzw. US 3,683,436 wird die Herstellung einer Bohrschraube mit gezwickter Bohrspitze beschrieben. Der Drahtrohling wird hierbei an einem Ende durch Fliesspressen in seinem Durchmesser verringert und anschliessend durch Zwicken in seine Endform gebracht.

Die Schrift EP 2 617 500 A1 beschreibt die Herstellung einer einteiligen Edelstahl-Bohrschraube, bei dem die Bohrspitze in zwei Umformschritten hergestellt wird. In einem ersten Schritt wird ein Endabschnitt eines Rohlings abgeplattet und danach der abgeplattete Endabschnitt zur endgültigen Bohrspitze umgeformt.

Es ist Aufgabe der vorliegenden Erfindung, die beschriebenen Verfahren zu verbessern, insbesondere Verfahrensschritte zur Herstellung einer korrosionsbeständigen, lochformenden und gewindeformenden Schraube mit einer Bohrspitze vorzuschlagen, die die Verwendung von Bimetallschrauben weitgehend überflüssig macht.

Diese Aufgabe wird mit den Merkmalen des unabhängigen Anspruches gelöst. Vorteilhafte Ausführungsformen der Erfindung sind in den abhängigen Ansprüchen angegeben.

### DARSTELLUNG DER ERFINDUNG

Im Folgenden wird der Herstellprozess einer Selbstbohrschraube gemäss vorliegender Erfindung als eine Abfolge von Prozessschritten beschrieben. Diese stellen eine fertigungstechnisch aufeinander folgende Reihe von Arbeitsschritten dar, die üblicherweise zeitnah nacheinander ausgeführt werden. Zur Herstellung finden in der Regel mehrstufige Kaltumform-Maschinen Verwendung, die getaktet und mit definierten Umformraten ein Werkstück mit Hilfe verschiedener Werkzeuge in die gewünschte Form bringen. Zwischenschritte in der Prozesskette wie Qualitätskontrollen, Transport, Reinigung, Sortierung und Konfektionierung sind nicht erwähnt und haben keinen Einfluss auf die Durchführbarkeit der Erfindung.

Die Selbstbohrschraube gemäss vorliegender Erfindung wird vollständig aus einem Edelstahlmaterial gefertigt und erreicht ihre hohe Festigkeit auch ohne einen den Fertigungsschritten A-F nachfolgenden, die Materialhärte gezielt verbessernden Wärmebehandlungsprozess. Ein solcher ist daher ausdrücklich ausgeschlossen. Der Vorteil liegt in einer Zeit- und Energieersparnis.

### Schritt A:

Dieser Prozessschritt umfasst die Bereitstellung eines Drahtabschnitts, der, wie im Stand der Technik bekannt, als Stück von einem Drahtcoil oder als Abschnitt von entsprechender Stangenware eines Edelstahlmaterials (Vormaterial) herstellbar ist. Im Folgenden wird dieser Abschnitt auch als Rohling bezeichnet. Der Rohling kann nach bekannter Art durch Abscheren, Absägen oder auf andere Weise aus dem Vormaterial gewonnen werden. Länge und Durchmesser des Rohlings hängen von den geplanten Dimensionen der herzustellenden Selbstbohrschraube ab, die Auslegung erfolgt nach den bekannten Regeln im Stand der Technik. Die Bezeichnung Rohling wird auch dann verwendet, wenn bereits ein Teil, aber nicht alle Umformschritte bzw. Prozessschritte ausgeführt worden sind.

### Schritt B:

Aufstauchen eines Schraubenkopfs mittels Kaltumformung an einem ersten Längsende des Rohlings. Das Aufstauchen des Schraubenkopfs kann auch in einem oder mehreren Zwischenschritten erfolgen, um den Umformgrad pro Stauchvorgang zu kontrollieren. Die Herstellung eines Kraftangriffs (Aussensechskant, Innnensechsrund, Inbus, ...) am oder im Schraubenkopf sei im Schritt B mitumfasst. Die Herstellung eines Schraubenkopfs an einem Rohling ist im Stand der Technik bekannt.

### Schritt C:

Verringern des Durchmessers eines ersten Abschnitts bzw. Schaftabschnitts am zweiten Längsende des Rohlings durch Kaltumformung. An dem, dem Schraubenkopf gegenüberliegenden, zweiten Längsende wird eine Durchmesserreduzierung vorgenommen. Dadurch wird eine Erhöhung der Oberflächenhärte bewirkt wie auch eine Verlängerung des betreffenden Abschnitts.

Die Länge des (ersten) Schaftabschnitts wird mindestens den Abschnitt umfassen, der im Schritt E für die Herstellung der Bohrspitze vorgesehen ist. Er kann aber bedarfsweise auch zusätzlich einen Schaftabschnitt einschliessen, der für das Gewinde auf dem Schaft vorgesehen ist. Die Durchmesserverringerung kann auch, wenn dies fertigungstechnisch sinnvoll oder nützlich ist, die ganze Schaftlänge bis unter den Kopf umfassen.

### Schritt D:

Verringern des Durchmessers eines zweiten Abschnitts bzw. Schaftabschnitts am zweiten Längsende des Rohlings durch Kaltumformung. An dem, dem Schraubenkopf gegenüberliegenden, zweiten Längsende wird eine weitere Durchmesserreduzierung vorgenommen. Die Länge des in diesem Schritt D betroffenen bzw. umgeformten Schaftabschnitts wird mindestens den (Längs-) Abschnitt umfassen, der im nachfolgenden Schritt E für die Herstellung der Bohrspitze vorgesehen ist. Der zweite Schaftabschnitt kann also eine weitere Verringerung des gesamten (verringerten) Schaftabschnittes aus Schritt C umfassen, aber auch nur eine Teil-Länge davon. Für die Durchmesserverringerung in Schritt C wie D können die im Stand der Technik bekannten Kaltumformverfahren angewendet werden.

### Schritt E:

Formen einer Bohrspitze am zweiten Längsende des Rohlings durch eine quer zur Längsachse erfolgende Zwickbewegung zwischen zwei gegenüberliegenden Werkzeugbacken. Der in Schritt D im Durchmesser verjüngte zweite Abschnitt am zweiten Längsende des Rohlings wird zur Bohrspitze umgeformt. Die Ausgestaltung bzw. Auslegung der Bohrspitze mit Hauptschneiden, Querschneiden, Spannuten, Freiflächen und die entsprechenden Werkzeugbacken erfolgt nach den Vorgaben im Stand der Technik je nach Anforderung.

Bei der Umformung zur Bohrspitze ist es bekannt, dass sogenannte Materialfahnen entstehen, das ist überschiessendes Material, das entlang der Schliessebene der Werkzeugbacken nach aussen verdrängt wird. Dies dient auch zur Sicherstellung, dass die Schneiden der Bohrspitze wie vorgesehen ausgeformt werden können. Die Materialfahnen sind in der Regel sehr dünn und brüchig.

### Schritt F:

Die an den Schneidkanten bzw. Konturkanten der Bohrspitzen verbliebenen, überstehenden Materialfahnen werden während eines nachfolgenden Gewinderollvorgangs abgeschert. Das Gewinde auf dem Schaft kann in voller Länge zwischen Schraubenkopf und Bohrspitze aufgebracht werden oder auch auf Teilbereichen, je nach Auslegung.

Die Erfindung zeichnet sich hierbei in den Schritten C und D dadurch aus, dass
- die Durchmesserverringerung bei jedem der beiden Schritte nur zwischen 10% und 15% beträgt (beide Werte eingeschlossen). Dadurch wird - im Vergleich zu einem Umformschritt mit höherem Umformgrad - eine geringere Belastung des Materials auf Ebene des Metallkristalls erzielt, was besser für den Erhalt der Härte des Rohlings an der umgeformten Stelle ist.
- Die Temperatur der Werkzeugbacken beim Zwickvorgang zwischen 70° und 200° beträgt bzw. gehalten wird.

Durch diese Auslegung wird erreicht, dass der finale, der Bohrspitze ihre Endform gebende Schritt eine Umformung mit geringerem Umformgrad bleibt und dadurch geringere Umformwärme entsteht. Die erzielte Kaltverfestigung bleibt in den Schneiden erhalten.

Die beim Vorformen entstehende Umformwärme kann durch die nur vorgeprägten Konturkanten besser in die umgebende Materialscheibe bzw. Materialfahnen abfliessen und verringert die Neigung zur Rekristallisation des Stahlgefüges.

Wie anfangs erwähnt erlaubt das vorgestellte Verfahren die vorteilhafte Anwendung mit vielen Edelstahlmaterialien. Darunter zählen Edelstähle der Normen 1.4301, 1.4551 oder 1.4307 (V2A), bzw. 1.4401, 1.4571 oder 1.4404 (V4A) oder 1.4462, 1.4410 oder 1.4501 (Duplex). Ähnliche Stahlsorten anderer Normenwerke seien äquivalent mitumfasst. Besonders vorteilhaft lässt sich Edelstahlmaterial als Ausgangsmaterial verwenden, das vor der Bearbeitung gemäss Schritt A bereits eine Oberflächenfestigkeit zwischen 200 bis 350 Hv aufweist.

In einer vorteilhaften Variante wird die Durchmesserverringerung in Schritt C höher als in Schritt D gewählt (innerhalb der angegebenen Grenzen). Dies hat Vorteile für die Struktur des Stahls auf Kristallebene.

Bei der Herstellung der Bohrspitze in Schritt E werden die an der Zwickbewegung beteiligten Werkzeugbacken auf einer Temperatur zwischen mindestens 100°C und höchstens 180°C gehalten. Der Vorteil hier ist, dass die in der späteren Anwendung besonders beanspruchten Oberflächen der zu formenden Bohrspitze in Kontakt mit einem definierten Wärmereservoir (Zwickbacken) kommen. Die Kühlung kann dabei durch aktives, ständiges Kühlen des Zwick-Werkzeugs erfolgen, durch externes, intermittierendes Abkühlen zwischen zwei nachfolgenden Werkstücken oder durch alternierendes Verwenden mehrerer Werkzeugsätze. Dabei spielt die thermische Masse der Zwickbacken, die Kontaktzeit, Art und Grösse des Werkstücks sowie die Anlagenbauart eine Rolle. Der Fachmann kann durch Versuchsreihen die entsprechenden Parameter ermitteln. Die genannten Temperaturen verstehen sich als die Oberflächentemperatur der Werkzeugbacke(n) bevor sie in Kontakt mit dem Werkstück kommen bis sich die Werkzeugbacken wieder öffnen. Dem Fachmann sind Verfahren bekannt, wie durch eingebaute (Thermo-)Sensoren bzw. durch optische Verfahren das Einhalten dieses Prozessfensters gewährleistet werden kann.

Nach den oben beschriebenen Kaltumformschritten A bis F folgt vorteilhaft eine Beschichtung, um die Verwendbarkeit der Schraube weiter zu verbessern. Bewährt hat sich insbesondere eine galvanische Zn-Ni Beschichtung. Dieser Prozessschritt sei hier als Schritt G bezeichnet. Bevorzugt wird die Zn-Ni Beschichtung aus Schritt G 12-15% Nickel aufweisen.

In einem weiteren Prozessschritt H kann auf der Zn-Ni Beschichtung gemäss Schritt G eine ein- oder mehrlagige Gleitbeschichtung aus Wachs, Kunststoffen oder Mischungen daraus aufgebracht werden. Solche Schichten wirken reibungsmindernd insbesondere auf der Bohrspitze und ihren Schneidkanten.

Durch die beschriebenen Umform-Verfahrensschritte A-E lässt sich die Oberflächenhärte des Rohlings nach Schritt E im dadurch umgeformten Bereich im Wesentlichen auf 450-500 Hv erhöhen. Mit "im Wesentlichen" sei damit gemeint, dass die ermittelten Werte im Rahmen der Messgenauigkeit und im Rahmen der in industriellen Massenfertigung üblichen Toleranzbereichen liegen werden.

Eine hochfeste Selbstbohrschraube lässt sich somit einstückig aus rostfreiem Edelstahl herstellen durch ein Verfahren wie vorgängig beschrieben.

### KURZBEZEICHNUNG DER FIGUR

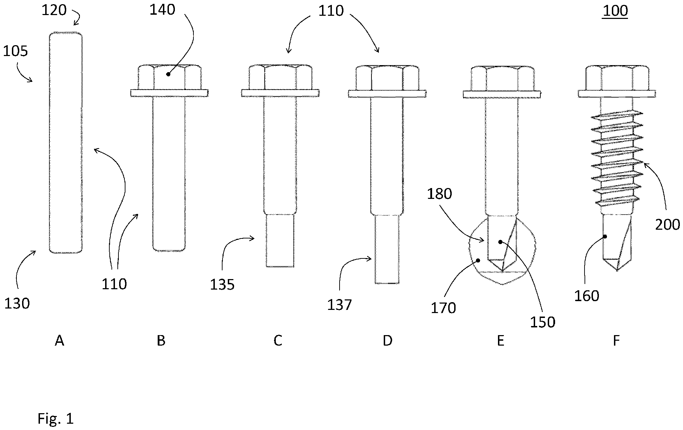

Figur 1 zeigt eine Abfolge von Fertigungsstadien A bis F analog den beschriebenen Prozessschritten.

### BESCHREIBUNG DER FIGUR

Figur 1 zeigt die Abfolge der in der Erfindung beschriebenen Kern-Verfahrensschritte A-F.

A zeigt einen Drahtabschnitt 105 mit erstem Längsende 120 und zweitem Längsende 130. Dieser Rohling 110 erhält in Schritt B einen Schraubenkopf 140 durch Kaltumformung. Der gezeigte Typ von Schraubenkopf 140 steht stellvertretend für alle Arten von technisch sinnvollen Schraubenköpfen. C zeigt einen durch Kaltumformung verjüngten (End)abschnitt 135 von Rohling 110.

D zeigt die Auswirkung des Verringerns des Durchmessers eines zweiten Abschnitts bzw. Schaftabschnitts 137 am zweiten Längsende des Rohlings 110. Die Länge der umgeformten Schaftabschnitte in Schritt C und D sind exemplarisch gezeigt und nicht massstäblich.

E zeigt den Zustand des Rohlings 110 nach dem Formen der Bohrspitze 150. Mit Referenzzeichen 170 ist die durch den Umformvorgang entstandene Materialfahne gezeigt. 180 bezeichnet die Schneidkanten, wo sie in die Materialfahne 170 übergehen.

Bereich F von Figur 1 zeigt die fertig kaltumgeformte Selbstbohrschraube 100 mit Gewinde 200 und von der Materialfahne 170 befreiten Bohrspitze 160.

Der Begriff Rohling wird als Sammelbegriff für alle (unfertigen) Erscheinungsformen der Selbstbohrschraube der Schritte A bis (und mit) E bezeichnet, auch wenn die äussere Erscheinung der Schraube sich von Schritt zu Schritt ändert bzw. am Ende weitgehend bereits der Selbstbohrschraube entspricht.

## Patentansprüche

1. Verfahren zur Herstellung einer hochfesten Selbstbohrschraube (100), vollständig aus einem Edelstahlmaterial, wobei die Selbstbohrschraube (100) keinen dem Herstellprozess nachgelagerten, die Materialhärte verbessernden Wärmebehandlungsprozess durchläuft,
**mit folgenden Schritten**
A. Bereitstellen eines schaftförmigen Rohlings (110) als Drahtabschnitt (105) aus einem Edelstahlmaterial;
B. Aufstauchen eines Schraubenkopfs (140) mittels Kaltumformung an einem ersten Längsende (120) des Rohlings (110);
C. Verringern des Durchmessers eines ersten Abschnitts (135) am zweiten Längsende (130) des Rohlings (110) durch Kaltumformung;
D. Verringern des Durchmessers eines zweiten Abschnitts (137) am zweiten Längsende (130) des Rohlings (110) durch Kaltumformung;
E. Formen einer Bohrspitze (150) am zweiten Längsende (130) des Rohlings (110) durch eine quer zur Längsachse erfolgende Zwickbewegung zwischen zwei gegenüberliegenden Werkzeugbacken;
F. Abscheren von an den Schneidkanten (180) der Bohrspitze (150) verbliebenen, überstehenden Materialfahnen (170) während eines nachfolgenden Gewinderollvorgangs
**dadurch gekennzeichnet, dass**
- beim Umformen in den Schritten C und D die Durchmesserverringerung zwischen jeweils 10-15% beträgt und
- die Temperatur der Werkzeugbacken in Schritt E zwischen mindestens 70°C und höchstens 200°C gehalten wird.

2. Verfahren nach Anspruch 1, **dadurch gekennzeichnet, dass** das Edelstahlmaterial ein Edelstahl ausgewählt aus den Normen 1.4301, 1.4551 oder 1.4307 (V2A), bzw. 1.4401, 1.4571 oder 1.4404 (V4A) oder 1.4462, 1.4362, 1.4410 oder 1.4501 (Duplex) ist.

3. Verfahren nach Anspruch 1-2, **dadurch gekennzeichnet, dass** das Ausgangs-Edelstahlmaterial vor der Bearbeitung gemäss Schritt A eine Oberflächenfestigkeit zwischen 200 bis 350 Hv aufweist.

4. Verfahren nach Anspruch 1-3, **dadurch gekennzeichnet, dass** die Durchmesserverringerung in Schritt C höher als in Schritt D gewählt wird.

5. Verfahren nach Anspruch 1-4, **dadurch gekennzeichnet, dass** die Temperatur der Werkzeugbacken in Schritt E zwischen mindestens 100°C und höchstens 180°C gehalten wird.

6. Verfahren nach Anspruch 1-5, **dadurch gekennzeichnet, dass** nach den Kaltumformschritten A bis F ein Beschichtungsschritt G erfolgt, wobei die Beschichtung eine galvanische Zn-Ni Beschichtung ist.

7. Verfahren nach Anspruch 6, **dadurch gekennzeichnet, dass** die die Zn-Ni Beschichtung aus Schritt G 12-15% Nickel aufweist.

8. Verfahren nach Anspruch 6-7, **dadurch gekennzeichnet, dass** auf die Zn-Ni Beschichtung gemäss Schritt G in einem Schritt H eine ein- oder mehrlagige Gleitbeschichtung aus Wachs, Kunststoffen oder Mischungen daraus aufgebracht wird.

9. Verfahren nach Anspruch 1-8, **dadurch gekennzeichnet, dass** die Oberflächenhärte des Rohlings nach Schritt E im dadurch umgeformten Bereich im Wesentlichen 450-500 Hv beträgt.

10. Hochfeste Selbstbohrschraube (100), einstückig hergestellt aus rostfreiem Edelstahl, nach einem Verfahren gemäss den Ansprüchen 1 bis 9.
